# EUROPÄISCHE PATENTSCHRIFT

(11) **EP 4 257 432 B1**
(45) Veröffentlichungstag und Bekanntmachung des Hinweises auf die Patenterteilung: **06.08.2025**
(21) Anmeldenummer: 22210299.8
(22) Anmeldetag: 29.11.2022
(51) Int. Cl.: B60R 16/02, B60R 13/08, H02G 3/22

(54) **BAUGRUPPE FÜR EINE LEITUNGSVERBINDUNG**
ASSEMBLY FOR A CABLE CONNECTION
MODULE POUR UNE CONNEXION DE CONDUITE

(30) Priorität: 05.04.2022 DE 102022203365
(43) Veröffentlichungstag der Anmeldung: 11.10.2023
(73) Patentinhaber: VOLKSWAGEN AG, 38440 Wolfsburg (DE)
(72) Erfinder: Strömsdörfer, Hans, 38162 Cremlingen (DE); Liers, Jens, 38446 Wolfsburg (DE); Böckler, Dirk, 38551 Ribbesbüttel (DE)

(56) Entgegenhaltungen:
- WO-A1-2006/131298
- DE-A1- 102013 008 944
- FR-A- 1 120 707
- FR-A1- 2 935 038
- US-A- 4 656 689

## Beschreibung

Die Erfindung betrifft eine Baugruppe für eine Leitungsverbindung zwischen einem Fahrzeuginnenraum und einem Motorraum eines Fahrzeugs, ein Fahrzeug, sowie ein Verfahren zum Herstellen einer Leitungsverbindung.

In modernen Fahrzeugen müssen die diversen (elektronischen) Komponenten in der Regel miteinander verbunden werden. Da diese Komponenten oft nicht einer einzelnen Stelle, sondern im Fahrzeug an verschiedenen Positionen verteilt angeordnet sind, führt dies dazu, dass auch eine Vielzahl von Leitungen im ganzen Fahrzeug verteilt ist.

Um die Einzelkomponenten miteinander zu verbinden, müssen die Leitungen quer durch das Fahrzeug führen. Dabei sind die einzelnen Bereiche im Fahrzeug teilweise durch Rahmenteile voneinander getrennt. Um die Einzelkomponenten dennoch miteinander verbinden zu können, ist es notwendig, in den Rahmenteilen bzw. in anderen trennenden Bauelementen entsprechende Öffnungen vorzusehen, durch welche die Leitungen geführt werden können. Dabei stellt das Einfädeln der Leitungen durch die Öffnungen einen nicht zu vernachlässigenden Aufwand bei der Montage des Fahrzeuges dar. Ferner wird durch jedes manuelle Einziehen der Leitungen verhindert, dass die Montage des Fahrzeuges weiter automatisiert erfolgen kann, da dieser Schritt sich nicht mit einem Roboter ausführen lässt. Zudem muss für gewöhnlich sichergestellt sein, dass Werker sich nicht in dem gleichen Bereich aufhalten, in dem zur gleichen Zeit ein Roboter aktiv ist.

Durch die verschiedenen Varianten von Fahrzeugkonfigurationen, insbesondere in Bezug darauf, ob das Fahrzeug als Rechtslenker oder Linkslenker ausgeführt ist, wird die Montage zusätzlich verkompliziert. In der Regel müssen dann auch die Öffnungen in den die Fahrzeugteile voneinander trennenden Wände entsprechend angepasst werden, damit die Leitungen zu den Einzelkomponenten geführt werden können. Das gilt insbesondere für die den Fahrzeuginnenraum vom Motorraum trennende Wand. Dadurch entstehen erhöhte Kosten für das Entwerfen und Fertigen der trennenden Wände. Zusätzlich verkompliziert sich die Montage des Fahrzeuges weiter. DE102013008944 zeigt eine Baugruppe für eine Leitungsverbindung zwischen einem Fahrzeuginnenraum und einem Motorraum eines Fahrzeugs.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung, eine Baugruppe für eine Leitungsverbindung zwischen einem Fahrzeuginnenraum und einem Motorraum eines Fahrzeugs, ein Fahrzeug, sowie ein Verfahren zum Herstellen einer Leitungsverbindung bereitzustellen, bei dem die Montage vereinfacht, die Kosten reduziert und die Sicherheit der Monteure verbessert wird.

Die voranstehende Aufgabe wird gelöst durch eine Baugruppe mit den Merkmalen des Anspruchs 1, ein Fahrzeug mit den Merkmalen des Anspruchs 7 sowie ein Verfahren mit den Merkmalen des Anspruchs 8.

Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Baugruppe beschrieben sind, selbstverständlich auch im Zusammenhang mit dem erfindungsgemäßen Fahrzeug und/oder dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung ist eine Baugruppe für eine Leitungsverbindung zwischen einem Fahrzeuginnenraum und einem Motorraum eines Fahrzeugs vorgesehen. Dabei weist die Baugruppe eine Zwischenwand auf, die dazu ausgeführt ist, zwischen dem Fahrzeuginnenraum und dem Motorraum angeordnet zu werden. Ferner hat die Baugruppe einen Leitungsstrang, welcher dazu ausgeführt ist, eine Vielzahl von Bordnetzkomponenten des Fahrzeuges miteinander elektrisch zu verbinden. Ebenfalls hat die Baugruppe eine Tülle, welche mit dem Leitungsstrang verbunden ist, wobei die Zwischenwand in einer Querrichtung des Fahrzeugs mittig eine Öffnung aufweist, in der die Tülle angeordnet ist.

Unter einer Baugruppe soll im Sinne der Erfindung eine Ansammlung von miteinander mechanisch in Bezug stehender Komponenten verstanden werden, welche um weitere Teile erweitert werden kann.

Eine Leitungsverbindung meint eine, insbesondere elektrische, Verbindung, welche durch zumindest eine Leitung, insbesondere ein Kabel, ermöglicht wird.

Unter einem Fahrzeuginnenraum im Sinne der Erfindung soll der Passagier- oder Frachtbereich des Fahrzeuges verstanden werden. Es kann vorgesehen sein, dass im Fahrzeuginnenraum ein Cockpit vorgesehen ist, welches dazu vorgesehen ist, die Steuerung des Fahrzeuges zu ermöglichen und den aktuellen Status des Fahrzeuges zu überwachen. Es spielt dabei keine Rolle, ob der Fahrzeuginnenraum grundsätzlich geschlossen, wie beispielsweise in einem PKW, oder geöffnet, wie beispielsweise in einem offenen Boot und einem Cabriolet ist. Genauso wenig ist es bei Motorraum entscheidend, ob dieser geöffnet oder hermetisch gegenüber der Umgebung abgeschlossen ist. Bei einem Motorraum im Sinne der Erfindung handelt es sich demnach um einen Bereich, in dem zumindest ein Motor des Fahrzeugs anordenbar ist.

Bei dem Fahrzeug kann es sich um jedwedes Land-, Wasser- oder Luftfahrzeug, insbesondere jedoch um ein Kraftfahrzeug, beispielsweise einen PKW handeln.

Mit einer Zwischenwand ist ein geometrischer Körper gemeint, welcher dazu ausgeführt ist zwei Bereiche räumlich voneinander zu trennen. Diese Trennung kann teilweise erfolgen, sodass noch eine Öffnung zwischen den Bereichen vorliegt. Es ist demnach nicht notwendig, dass die Bereiche durch die Zwischenwand hermetisch voneinander getrennt sind. Auch einzelne Streben, wie beispielsweise die A-Säulen eines Fahrzeuges können als Zwischenwand aufgefasst werden. Die A-Säulen des Fahrzeuges trennen beispielsweise den Fahrzeuginnenraum von der Umgebung um das Fahrzeug herum.

Mit einem Leitungsstrang im Sinne der Erfindung soll zumindest eine Leitung, in der Regel aber eine Vielzahl von Leitungen verstanden werden, welche zu einem Strang verbunden sind. Es kann vorgesehen sein, dass die einzelnen Leitungen, insbesondere Kabel, wiederum eine Vielzahl von Litzen aufweisen, welche auch einzeln ummantelt sein können. Es kann ebenfalls vorgesehen sein, dass der Leitungsstrang einen Mantel und/oder einen Kabelbinder aufweist. Hierdurch wird der Vorteil erreicht, dass der Leitungsstrang gegen Umwelteinflüsse geschützt wird und/oder darüber hinaus die Handhabung des Leitungsstrangs beim Montieren vereinfacht wird.

Es kann ebenfalls vorgesehen sein, dass der Leitungsstrang zumindest eine Längswasserabdichtung aufweist, welche verhindert, dass Feuchtigkeit über die Kabel durch eine Art Kapillareffekt in den Fahrzeuginnenraum geführt wird.

Es kann vorgesehen sein, dass der Leitungsstrang sämtliche Bordnetzkomponenten und/oder sämtliche Bordnetzkomponenten des Fahrzeuginnenraums und des Motorraums, miteinander verbindet. Hierdurch wird der Vorteil erreicht, dass lediglich ein einziger Leitungsstrang vorgesehen sein muss, um die Bordnetzkomponenten miteinander zu verbinden, sodass auch nur ein Leitungsstrang durch die Öffnung der Zwischenwand geführt werden muss. Hierdurch wird die Montage weiter vereinfacht.

Es kann vorgesehen sein, dass der Leitungsstrang als einteiliger Leitungsstrang ausgebildet ist. Einteilig bedeutet hierbei, dass sämtliche Komponenten ohne Unterbrechung, ähnlich wie im Nervensystem des Menschen, an einem einzigen Strang verbunden sind. Mit anderen Worten weist ein einteiliger Verbindungsstrang keine Verbindungselemente auf, um die einzelnen Strangteile miteinander zu verbinden. Hierdurch wird der Vorteil erreicht, dass die Montage weiter vereinfacht wird, da keine weiteren Verbindungen hergestellt werden müssen, welche jeweils eine Fehlerquelle darstellen können.

Unter einer Tülle soll ein Bauteil verstanden werden, welches dazu ausgeführt ist, den Leitungsstrang aufzunehmen. Hierzu weist die Tülle eine, insbesondere kreisrunde, Öffnung auf, durch welchen der Leitungsstrang hindurch läuft.

Unter einer Querrichtung des Fahrzeuges soll diejenige Richtung bzw. Ebene oder Achse gemeint sein, welche quer zur üblichen Fahrtrichtung des Fahrzeuges verläuft. Bei einem PKW entspräche dies beispielsweise einer Achse, die als zwischen den beiden Außenspiegeln verlaufend gedacht werden kann. In einem Rechtssystem, bei dem die Höhe des Fahrzeuges auf der z-Achse liegt, entspräche die Querrichtung demnach der y-Achse.

Durch die mittige Anordnung der Öffnung bzw. der Tülle in der Öffnung wird der Vorteil erreicht, dass der Leitungsstrang zentriert durch die Zwischenwand geführt werden kann, sodass beispielsweise für Rechts- und Linkslenkerfahrzeuge eine einzige Variante der Baugruppe verwendet werden kann. Der Fachmann erkennt, dass mit mittig nicht zwangsläufig eine auf den Millimeter genau im Zentrum der Zwischenwand liegende Anordnung gemeint ist, sondern lediglich ausreichend zentral ausgebildet, um bei der Auslegung der übrigen Komponenten, insbesondere des Cockpits, keine Änderungen an der Baugruppe vornehmen zu müssen, wenn von einem Rechtslenker-Design auf ein Linkslenker-Design gewechselt wird und umgekehrt. Es kann jedoch auch vorgesehen sein, dass mittig exakt die mittlere Anordnung der Öffnung in der Zwischenwand meint. Hierdurch ergibt sich der Vorteil, dass besonders einfach die Symmetrie für die vereinfachte Anordnung bei Rechts- und Linkslenkervarianten ausgenutzt werden kann. Die Öffnung kann einen Durchmesser im Bereich von ca. 100 bis 200 mm, bevorzugt 120 bis 140 mm aufweisen, wodurch ein besonders leichtes Durchführen des Leitungsstrangs erlaubt wird, insbesondere falls dieser für die Montage in einem Packsack zusammengefasst ist.

Im Rahmen der Erfindung ist es weiterhin denkbar, dass die Zwischenwand einen Scheibenquerträger aufweist, wobei die Öffnung in der Querrichtung des Fahrzeugs mittig im Scheibenquerträger angeordnet ist. Mit anderen Worten kann ein Scheibenquerträger als Teil der Zwischenwand eine Ausnehmung umfassen, welche dazu ausgeführt ist, die Tülle aufzunehmen.

Dabei soll unter einem Scheibenquerträger im Sinne der Erfindung ein geometrischer Körper verstanden werden, welcher dazu ausgeführt ist, eine Scheibe, insbesondere eine Windschutzscheibe, des Fahrzeuges zu tragen. Zur Verbindung des Scheibenquerträgers mit der Scheibe kann eine Verbindungsfläche vorgesehen sein, mit der die Scheibe verklebt werden kann.

Der Scheibenquerträger bzw. die Anordnung der Tülle im Scheibenquerträger bietet den Vorteil, dass auch beim zumindest teilweise bereits eingebauten Motor der Leitungsstrang besonders einfach durch die Öffnung gefädelt und mit den entsprechenden Stellen im Motorraum verbunden werden kann.

Es kann vorgesehen sein, dass die Öffnung im Scheibenquerträger nach oben hin offen ausgebildet ist. Mit anderen Worten kann vorgesehen sein, dass der Scheibenquerträger, insbesondere in der Verbindungsfläche zum Verkleben der Scheibe, eine Ausnehmung aufweist. Hierdurch wird der Vorteil erreicht, dass nicht nur der Durchmesser der eigentlichen Öffnung zum Durchfädeln der Leitung verwendet werden kann, sondern dass zwischen dem Scheibenquerträger und der gegebenenfalls bereits angebrachten Motorhaube ein Freiraum entsteht, durch den der Leitungsstrang führbar ist. Hierdurch wird die Montage weiter vereinfacht.

Weiterhin kann bei einer erfindungsgemäßen Baugruppe vorteilhafterweise vorgesehen sein, dass die Tülle einen Führungsabschnitt aufweist, in dem der Leitungsstrang geführt ist, und/oder dass die Tülle einen Befestigungsabschnitt aufweist, der dazu ausgeführt ist, die Tülle an der Zwischenwand zu befestigen. Mit anderen Worten kann die Baugruppe zumindest zwei Bereiche aufweisen, welche zum einen der Positionierung des Leitungsstrangs dienen und zum anderen der Positionierung der Tülle selbst in Relation zur Zwischenwand ausgeführt sind.

Es kann vorgesehen sein, dass der Befestigungsabschnitt und der Führungsabschnitt aus unterschiedlichen Materialien ausgebildet sind. Beispielsweise kann der Befestigungsabschnitt aus einem Kunststoff oder einem Metall ausgebildet sein, welcher eine höhere Festigkeit aufweist als der Führungsabschnitt. Hierdurch wird der Vorteil erreicht, dass die Tülle besonders zuverlässig an der Zwischenwand befestigt werden kann. Es kann ebenfalls vorgesehen sein, dass der Führungsabschnitt aus einem elastischen Material, insbesondere aus einem Gummimaterial geformt ist, wodurch der Vorteil erreicht wird, dass der Leitungsstrang besonders einfach in der Tülle aufgenommen werden kann.

Es kann vorgesehen sein, dass der Führungsabschnitt und der Befestigungsabschnitt zusammen in einem Zwei-Komponenten-Spritzgussverfahren gefertigt werden. Hierdurch wird der Vorteil erreicht, dass die Herstellung der Tülle und damit der Baugruppe insgesamt vereinfacht ist.

Weiterhin kann bei einer erfindungsgemäßen Baugruppe vorteilhafterweise vorgesehen sein, dass die Tülle zumindest ein Ohr aufweist, welches eine Öffnung zur Aufnahme eines Befestigungsmittels aufweist und dazu ausgeführt ist, an der Zwischenwand anzuliegen. Mit anderen Worten kann zumindest eine Verbindungslasche vorgesehen sein, welche eine Ausnehmung aufweist, durch die ein Befestigungsmittel geführt werden kann, sodass die Verbindungslasche mit der Zwischenwand verbunden werden kann. Dies bietet den Vorteil, dass die Tülle besonders zuverlässig an der Zwischenwand befestigt werden kann. Falls darüber hinaus an der Tülle eine Dichtung vorgesehen ist, kann durch diese Befestigung ein besonders sicherer Sitz in dieser Dichtung gewährleistet werden.

Insbesondere kann vorgesehen sein, dass zwei, insbesondere gegenüberliegende, Ohren vorgesehen sind, wodurch ein besonders fester Sitz der Tülle ermöglicht wird.

Als Befestigungsmittel können beispielsweise Schrauben, Nieten oder ähnliche Verbindungsmittel vorgesehen sein.

Im Rahmen der Erfindung ist es weiterhin denkbar, dass die Tülle eine Dichtung aufweist, welche dazu ausgeführt ist, die Tülle gegen die Zwischenwand abzudichten. Hierdurch wird der Vorteil erreicht, dass keine Feuchtigkeit aus dem Motorraum über die Tülle bis in den Fahrzeuginnenraum vordringen kann.

Es kann vorgesehen sein, dass die Dichtung als Dichtring ausgebildet ist, welcher insbesondere um einen Befestigungsabschnitt der Tülle herum angeordnet sein kann. Hierdurch wird der Vorteil erreicht, dass eine besonders einfache und sichere Abdichtung der Tülle ermöglicht wird. Insbesondere, wenn der Befestigungsabschnitt Ohren aufweist, die mit der Zwischenwand verbunden sind, lässt sich die Dichtung bzw. der Dichtring besonders effektiv an eine Zwischenwand anpressen, sodass die Dichtung besonders sicher gewährleistet wird.

Erfindungsgemäß weist die Tülle eine Lasche auf, die dazu ausgeführt ist, an der Zwischenwand anzuliegen. Mit anderen Worten kann vorgesehen sein, dass die Tülle einen Abschnitt aufweist, welcher an der Zwischenwand anliegt. Dies bietet den Vorteil, dass sich die Tülle so vereinfacht an der Zwischenwand positionieren lässt. Insbesondere kann vorgesehen sein, dass die Lasche in einem Winkel von etwa 90° zum Befestigungsabschnitt der Tülle ausgebildet ist. Ferner kann vorgesehen sein, dass die Lasche in eine nach oben hin offene Ausnehmung eines Scheibenquerträgers eingreift, wenn die Tülle mit der Zwischenwand bzw. dem Scheibenquerträger verbunden ist. Es kann vorgesehen sein, dass die Lasche ferner eine Nut aufweist, in die der Scheibenquerträger, insbesondere eine Verbindungsfläche des Scheibenquerträgers, eingreift, wenn die Tülle mit der Zwischenwand verbunden ist. Hierdurch wird der Vorteil erreicht, dass die Tülle einfacher an der Zwischenwand positionierbar ist und zudem die Verbindung sicher hält.

Die Lasche weist eine Materialeinlage auf, welche aus dem gleichen Material besteht wie ein die Lasche umgebender Teil der Zwischenwand. Insbesondere kann vorgesehen sein, dass die Lasche eine Materialeinlage aufweist, welche aus dem gleichen Material besteht wie das Material einer Verbindungsfläche des Scheibenquerträges. Hierdurch kann der Vorteil erreicht werden, dass beim Verkleben der Scheibe mit dem Scheibenquerträger bzw. mit der Verbindungsfläche des Scheibenquerträgers auf einen einzigen Kleber zurückgegriffen werden kann, und nicht etwa für den Scheibenquerträger und die Tülle, welche gegebenenfalls aus unterschiedlichen Materialien bestehen, unterschiedliche Kleber benötigt werden. Hierdurch vereinfacht sich die Montage der Baugruppe weiter.

Es ist ferner bei einer erfindungsgemäßen Baugruppe denkbar, dass die Tülle zumindest ein Rastelement aufweist, welches dazu ausgeführt ist, mit der Zwischenwand zu verrasten. Hierdurch wird ein sicherer Sitz der Tülle an der Zwischenwand ermöglicht. Es kann vorgesehen sein, dass die Tülle mehrere Rastelemente, insbesondere vier Rastelemente, aufweist. Hierdurch wird der Sitz der Tülle an der Zwischenwand weiter verbessert. Es kann vorgesehen sein, dass die Rastelemente an einem Kranz angeordnet sind, der Teil des Befestigungsabschnitts der Tülle ist.

Insbesondere in Kombination mit dem Vorsehen einer Lasche an der Tülle, die dazu vorgesehen ist, der Zwischenwand anzuliegen ergibt sich der Vorteil, dass eine derartige Tülle in die Zwischenwand eingeschnäbelt werden kann. Dabei wird zunächst die Lasche in die Zwischenwand, insbesondere den Scheibenquerträger, eingehängt und anschließend die Tülle an die Zwischenwand angedrückt, woraufhin die Rastelemente mit der Zwischenwand verrasten. Die stellt eine besonders einfache Art der Montage dar.

Gemäß einem weiteren Aspekt der Erfindung ist ein Fahrzeug vorgesehen, aufweisend eine Baugruppe nach einem der vorhergehenden Ansprüche. Bei dem Fahrzeug kann es sich um jedwedes Land-, Wasser- oder Luftfahrzeug, insbesondere jedoch um ein Kraftfahrzeug, beispielsweise einen PKW handeln.

Somit bringt ein erfindungsgemäßes Fahrzeug die gleichen Vorteile mit sich, wie sie bereits ausführlich mit Bezug auf eine erfindungsgemäße Baugruppe beschrieben worden sind.

Gemäß einem weiteren Aspekt der Erfindung ist ein Verfahren zum Herstellen einer Leitungsverbindung zwischen einem Fahrzeuginnenraum und einem Motorraum eines Fahrzeugs vorgesehen. In diesem Verfahren sind zumindest die folgenden Schritte vorgesehen:
- Positionieren einer Baugruppe nach einem der Ansprüche 1 bis 8 an einem Cockpit,
- Durchführen des Leitungsstrangs durch die Öffnung der Zwischenwand,
- Befestigen der Tülle an der Zwischenwand.

Somit bringt ein erfindungsgemäßes Verfahren die gleichen Vorteile mit sich, wie sie bereits ausführlich mit Bezug auf ein erfindungsgemäßen Baugruppe und/oder einem erfindungsgemäßen Fahrzeug beschrieben worden sind.

Bei dem Cockpit handelt es sich um eine Baueinheit zum Steuern bzw. Überwachen des Zustandes des Fahrzeugs. Mit Durchführen ist das Ein- bzw. Durchfädeln des Leitungsstrangs durch die Öffnung der Zwischenwand gemeint.

Im Rahmen der Erfindung ist es weiterhin denkbar, dass ferner zumindest einer der folgenden Schritte vorgesehen ist:
- Verpacken von Bordnetzkomponenten des Fahrzeuges in einem Packsack,
- Einfahren des Cockpits durch eine Türöffnung des Fahrzeugs, insbesondere durch einen Roboter,
- Befestigen des Cockpits an einem Fahrzeugrahmen, insbesondere durch einen Roboter,
- Verbinden einer Lasche der Tülle mit der Zwischenwand,
- Verrasten zumindest eines Rastelementes mit der Zwischenwand.

Durch das Verpacken der Bordnetzkomponenten in einem Packsack lässt sich der Vorteil erreichen, dass die Montage weiter vereinfacht wird. Dabei wird beim Montieren der Packsack durch die Öffnung, welche für den Leitungsstrang bzw. die Tülle vorgesehen ist, durchgeführt. Hierbei kann unter anderem der Vorteil ausgenutzt werden, dass die Tülle noch nicht an der Öffnung positioniert ist, sodass insbesondere bei einer nach oben hin offenen Öffnung, beispielsweise beim Scheibenquerträger, die Öffnung größer ist als die Tülle selbst.

Durch die erfindungsgemäße Baugruppe lässt sich das Einfahren des Cockpits vollautomatisch, insbesondere durch einen Roboter durchführen. Hierdurch wird der Vorteil erreicht, dass die Fertigung weiter vereinfacht wird und Kosten gespart werden können. Durch das Befestigen des Cockpits am Fahrzeugrahmen können die Bordnetzkomponenten bzw. der Packsack einfach vom Cockpit genommen und durch die Öffnung in der Zwischenwand hin durchgeführt werden, ohne dass das Cockpit Gefahr läuft, sich hierbei zu bewegen.

Beim Verbinden der Lasche mit der Zwischenwand bzw. einem Scheibenquerträger kann vorgesehen sein, dass die Lasche eine entsprechende Nut aufweist, in die der Scheibenquerträger, insbesondere eine Verbindungsfläche der Scheibenquerträger, eingreift. Hierdurch kann eine besonders einfache Montage gewährleistet werden.

Zum Verrasten des Rastelementes der Tülle mit der Zwischenwand wird die Tülle an die Zwischenwand angedrückt, woraufhin die Rastelemente mit der Zwischenwand verrasten. Dies stellt eine besonders einfache Art der Montage dar.

Insbesondere die Kombination des Eingreifens der Zwischenwand in die Nut der Lasche mit dem Verrasten des Rastelements mit der Zwischenwand kann durch eine Art Einschnäbeln erfolgen, was eine besonders einfache Art der Montage darstellt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figur 1: eine Ansicht vom Fahrzeuginnenraum zum Motorraum hin mit einer Zwischenwand,
- Figur 2: eine Frontaufsicht auf dem Motorraum mit dem Leitungsstrang,
- Figur 3: eine Ansicht der Tülle vom Fahrzeuginnenraum aus gesehen,
- Figur 4: eine Ansicht der Tülle vom Motorraum aus gesehen,
- Figur 5: zwei Ansichten in der mit der Zwischenwand verbundenen Tülle vom Motorraum aus gesehen (rechts) und vom Fahrzeuginnenraum aus gesehen (links),
- Figur 6: Einfahren des Cockpits einer Fahrzeugtür (links) und Befestigen und Eindrehen des Cockpits am Fahrzeugrahmen (rechts).

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

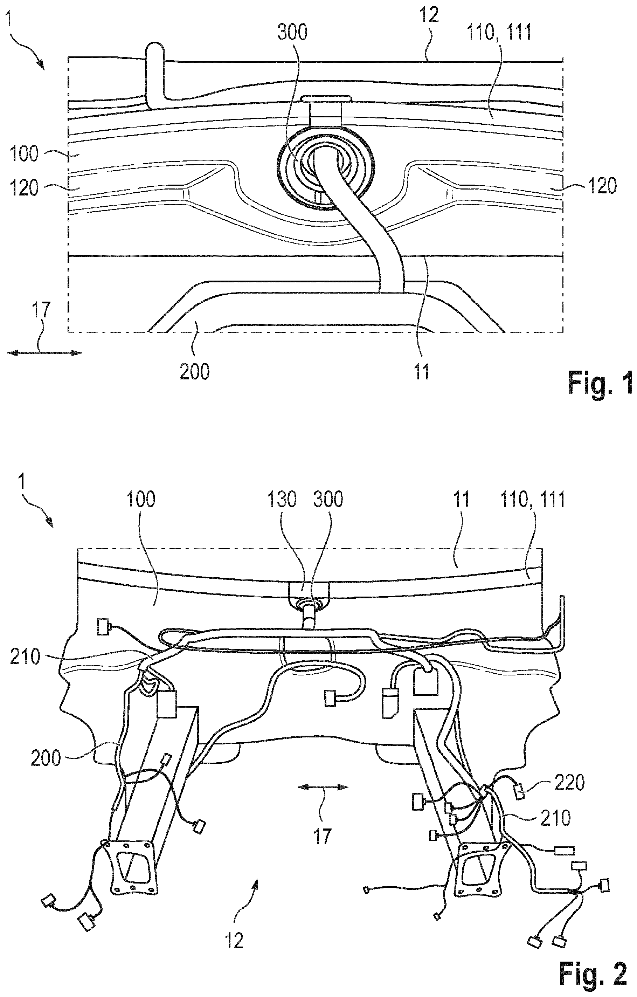

Figur 1 zeigt eine Baugruppe 1 für eine Leitungsverbindung zwischen einem Fahrzeuginnenraum 11 und einem Motorraum 12 eines Fahrzeugs 10. Wie der Figur 1 zu entnehmen ist, weist die Baugruppe 1 eine Zwischenwand 100 auf, die dazu ausgeführt ist, zwischen dem Fahrzeuginnenraum 11 und dem Motorraum 12 angeordnet zu werden. Ferner weist die Baugruppe 1 einen Leitungsstrang 200 auf, welcher dazu ausgeführt ist, eine Vielzahl von Bordnetzkomponenten des Fahrzeuges 10 (hier nur ausschnittsweise gezeigt) miteinander elektrisch zu verbinden. Ebenfalls zu erkennen ist, dass die Baugruppe 1 eine Tülle 300 aufweist, welche mit dem Leitungsstrang 200 verbunden ist, wobei die Zwischenwand 100 in einer Querrichtung 17 des Fahrzeugs 10 mittig eine Öffnung 130 aufweist, in der die Tülle 300 angeordnet ist.

In der Figur 1 ist die Zwischenwand 100 als ein Scheibenquerträger 110 ausgebildet, wobei die Öffnung 130 in der Querrichtung 17 des Fahrzeugs 10 mittig im Scheibenquerträger 110 angeordnet ist.

Dabei weist der Scheibenquerträger 110 Verstärkungselemente 120 auf, welche dazu ausgeführt sind, die mechanische Stabilität des Scheibenquerträgers 110 zu verbessern. Insbesondere wird durch die Verstärkungselemente 120 die durch die Öffnung 130 entstehende Schwachstelle in der mechanischen Stabilität des Scheibenquerträgers 110 ausgeglichen. Die Verstärkungselemente 120 können beispielsweise als erhöhte Materialstärken im Scheibenquerträger 110, als Bereiche, in denen spezielle Zusatzstoffe, beispielsweise Glas-oder Kohlefaserverstärkung, vorgesehen sind oder wie hier in der Figur 1 gezeigte Vorsprünge ausgebildet sein.

In Bezug auf die Figur 2, welche ebenfalls eine Baugruppe 1 darstellt, lässt sich der Leitungsstrang 200 im eingebauten Zustand erkennen. Dabei wird deutlich, dass der Leitungsstrang 200 neben Leitungen 210 auch Funktionsbaugruppen 220 aufweisen kann. Wie schon in der Figur 1 gezeigt ist auch in der Figur 2 zu erkennen, dass die Zwischenwand 100 als Scheibenquerträger 110 ausgebildet ist, und eine Öffnung 130 in der Mitte der Querrichtung 17 (mit einem Pfeil gekennzeichnet) des Scheibenquerträgers 110 aufweist. In dieser Öffnung 130 ist die Tülle 300 angeordnet und befestigt. Der Leitungsstrang 200 führt vom Fahrzeuginnenraum 11 zum Motorraum 12.

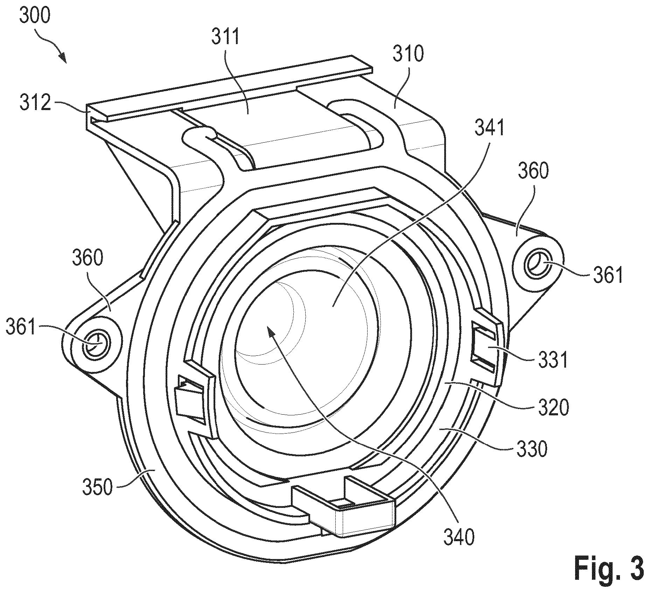

In der Figur 3 ist eine Tülle 300 gezeigt, die einen Führungsabschnitt 340 aufweist, in dem der Leitungsstrang 200 (hier nicht gezeigt) geführt ist. Der Führungsabschnitt 340 kann dabei einen elastischen Abschnitt 341 aufweisen. Dieser lässt sich beispielsweise zum Durchführen des Leitungsstrangs aufweiten, wodurch sich der Leitungsstrang 200 einfach mit der Tülle verbinden lässt. Beim Zusammenziehen des elastischen Abschnitts 341 werden die einzelnen Leitungen 210 des Leitungsstrangs 200 so stark aneinandergepresst, dass keine Wasserslängsabdichtung am Leitungsstrang 200 mehr vorgesehen werden muss.

Ferner ist in der Figur 3 an der Tülle 300 ein Befestigungsabschnitt 320 zu erkennen, der dazu ausgeführt ist, die Tülle 300 an der Zwischenwand 100 zu befestigen. Die Befestigung kann beispielsweise durch Formschluss, Kraftschluss und/oder Stoffschluss erfolgen.

In dem in der Figur 3 gezeigten Ausführungsbeispiel der Tülle 300 ist zu erkennen, dass die Tülle 300 zumindest ein Ohr 360 aufweist, welches eine Öffnung 361 zur Aufnahme eines Befestigungsmittels aufweist und dazu ausgeführt ist, an der Zwischenwand 100 anzuliegen. In der Figur 3 sind zwei Ohren 360 vorgesehen, welche jeweils eine Öffnung 361 zur Aufnahme eines Befestigungsmittels aufweisen. Die beiden Ohren 360 sind zudem einander gegenüberliegend am Befestigungsabschnitt 320 angeordnet. Hierdurch lässt sich eine besonders zuverlässige Befestigung der Tülle 300 an der Zwischenwand 100 erreichen. Ferner ist in der Figur 3 zu erkennen, dass die Tülle 300 eine Dichtung 350 aufweist, welche dazu ausgeführt ist, die Tülle 300 gegen die Zwischenwand 100 abzudichten. Die Dichtung 350 ist hier als Dichtungsring 350 ausgebildet, welcher den Befestigungsabschnitt 320 bzw. einen Kragen 330 des Befestigungsabschnitts ringförmig umgibt.

Ebenfalls in der Figur 3 zu erkennen ist, dass die Tülle 300 zumindest ein Rastelement 331 aufweist, welches dazu ausgeführt ist, mit der Zwischenwand 100 zu verrasten. Diese sind im gezeigten Ausführungsbeispiel auf einem Kragen 330 angeordnet, welcher ein Teil des Befestigungsabschnitts 320 ist.

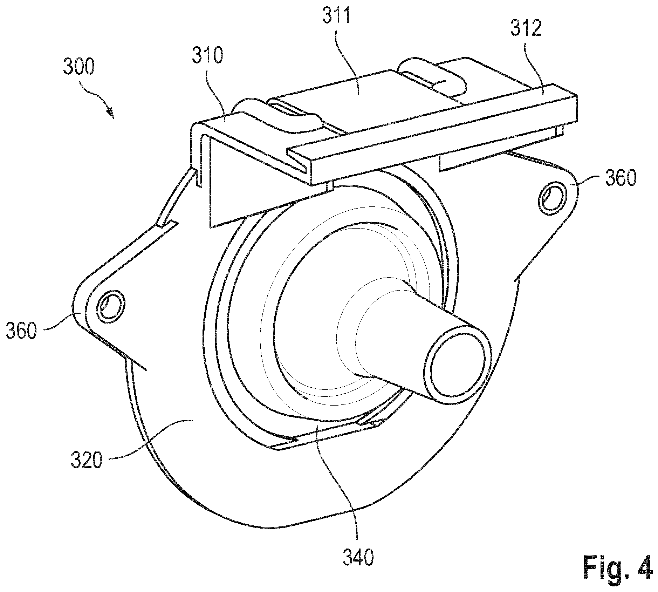

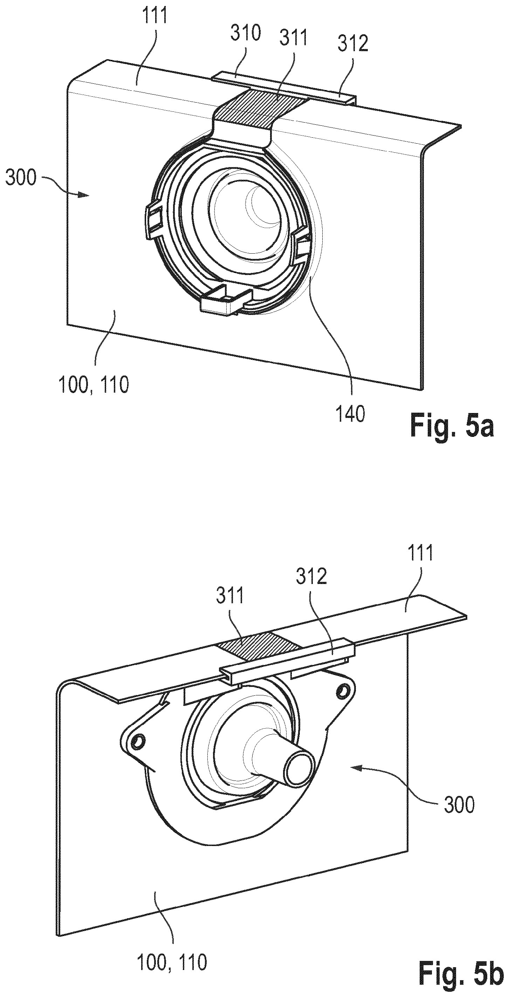

In der Figur 4 ist eine Rückansicht vom Innenraum des Fahrzeugs her gezeigt. Auch hier lassen sich der Befestigungsabschnitt 320 sowie der elastische Führungsabschnitt 340 erkennen. Ebenfalls gezeigt ist, dass die Tülle 300 eine Lasche 310 aufweist, die dazu ausgeführt ist, an der Zwischenwand 100 anzuliegen. Das Zusammenspiel zwischen der Lasche 310 und der Zwischenwand 100 lässt sich in der nachfolgenden Figur 5 veranschaulichen.

In der Figur 5 ist eine Vorder- (vom Motorraum aus, rechts) und eine Rückansicht (vom Fahrzeuginnenraum aus, links) der in die Zwischenwand 100 eingebauten Tülle 300 gezeigt. Wie insbesondere in der rechten Ansicht zu erkennen ist, greift die Lasche 310 der Tülle 300 mit einer Kante 312 in die Zwischenwand 100 bzw. deren Scheibenquerträgerkante 111, ein. Die Scheibenquerträgerkante 111 fungiert als Verbindungsfläche 111 zum Verbinden des Scheibenquerträgers 110 mit der Scheibe (hier nicht gezeigt). Mit anderen Worten hat die Lasche 310 eine Nut, in die die Verbindungsfläche 111 eingreift. Wie ebenfalls in der Figur 5 zu erkennen ist, hat die Verbindungsfläche 111 an der Stelle, an der die Tülle 300 in die Zwischenwand 100 eingebaut wird, eine Ausnehmung. Genau an dieser Ausnehmung der Verbindungsfläche 111 kann an der Lasche 310 eine Materialeinlage 311 vorgesehen sein, welche aus dem gleichen Material besteht wie ein die Lasche 310 umgebender Teil der Zwischenwand 100. Hierdurch wird der Vorteil erreicht, dass bei einem Kleben der Scheibe lediglich ein Kleber verwendet werden kann, da lediglich zwei unterschiedliche Materialien miteinander verbunden werden.

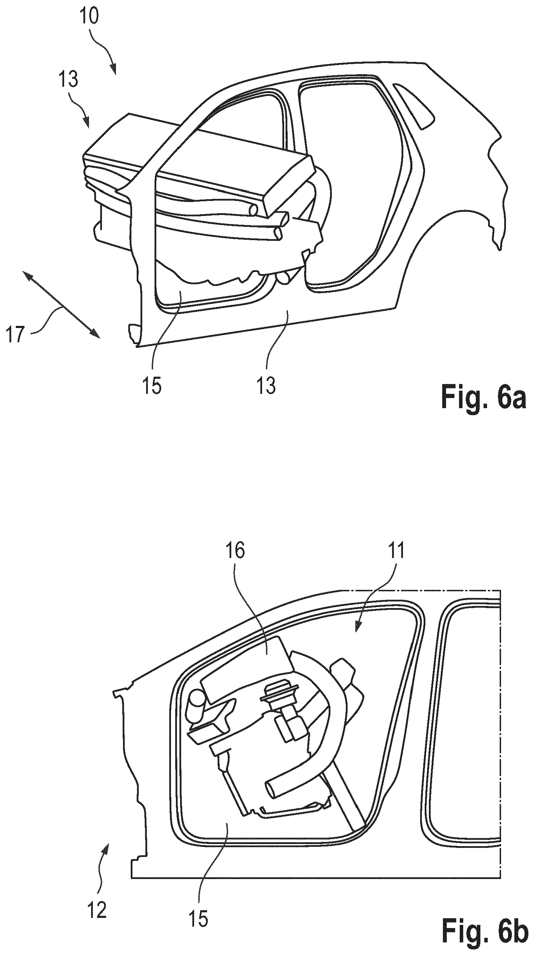

In der Figur 6 ist schließlich ein Teil eines Fahrzeugs 10, insbesondere ein Fahrzeugrahmen 13, gezeigt, welches eine Baugruppe 1 aufweist.

Anhand der Darstellung lässt sich das erfindungsgemäße Verfahren zum Herstellen einer Leitungsverbindung zwischen einem Fahrzeuginnenraum 11 und einem Motorraum 12 eines Fahrzeugs 10 erläutern. Dabei weist das erfindungsgemäße Verfahren die folgenden Schritte auf:
- Positionieren einer Baugruppe 1 an einem Cockpit 14, insbesondere in einem hierfür vorgesehenen Packbereich 16,
- Durchführen des Leitungsstrangs 200 durch die Öffnung 130 der Zwischenwand 100,
- Befestigen der Tülle 300 an der Zwischenwand 100.

Dabei können ferner die folgenden Schritte vorgesehen sein:
- Verpacken von Bordnetzkomponenten des Fahrzeuges 10 in einem Packsack,
- Einfahren des Cockpits 14 durch eine Türöffnung 15 des Fahrzeugs 10,
- Befestigen des Cockpits 14 an einem Fahrzeugrahmen 13,
- Verbinden einer Lasche 310 der Tülle 300 mit der Zwischenwand 100,
- Verrasten zumindest eines Rastelementes 331 mit der Zwischenwand 100.

Dabei kann der Packsack in dem dafür vorgesehenen Packbereich 16 auf dem Cockpit des Fahrzeugs 10 befestigt werden. Durch die Lenkerunabhängigkeit und die Führung des Leitungsstrangs durch eine zentrale Öffnung in der Zwischenwand kann das Einfahren des Cockpits 14 durch die Türöffnung 15 des Fahrzeugs 10 vollautomatisiert, insbesondere durch einen Roboter erfolgen. Hierdurch wird die Montage weiter vereinfacht und die Kosten reduziert.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Baugruppe

- 10: Fahrzeug
- 11: Fahrzeuginnenraum
- 12: Motorraum
- 13: Fahrzeugrahmen
- 14: Cockpit
- 15: Türöffnung
- 16: Packbereich
- 17: Querrichtung

- 100: Zwischenwand
- 110: Scheibenquerträger
- 111: Scheibenquerträgerkante, Verbindungsfläche
- 120: Verstärkungselement
- 130: Öffnung
- 140: Wulst

- 200: Leitungsstrang
- 210: Leitung
- 220: Funktionsbaugruppen

- 300: Tülle
- 310: Lasche
- 311: Materialeinlage
- 312: Kante
- 320: Befestigungsabschnitt
- 330: Kragen
- 331: Rastelement
- 340: Führungsabschnitt
- 341: elastischer Abschnitt
- 350: Dichtung
- 360: Ohr
- 361: Öffnung

## Patentansprüche

1. Baugruppe (1) für eine Leitungsverbindung zwischen einem Fahrzeuginnenraum (11) und einem Motorraum (12) eines Fahrzeugs (10), aufweisend:
- eine Zwischenwand (100), die dazu ausgeführt ist, zwischen dem Fahrzeuginnenraum (11) und dem Motorraum (12) angeordnet zu werden,
- einen Leitungsstrang (200), welcher dazu ausgeführt ist, eine Vielzahl von Bordnetzkomponenten des Fahrzeuges (10) miteinander elektrisch zu verbinden,
- eine Tülle (300), welche mit dem Leitungsstrang (200) verbunden ist, wobei die Tülle (300) eine Lasche (310) aufweist, die dazu ausgeführt ist, an der Zwischenwand (100) anzuliegen,
wobei die Zwischenwand (100) in einer Querrichtung (17) des Fahrzeugs (10) mittig eine Öffnung (130) aufweist, in der die Tülle (300) angeordnet ist,
wobei die Lasche (310) eine Materialeinlage (311) aufweist, welche aus dem gleichen Material besteht wie ein die Lasche (310) umgebender Teil der Zwischenwand (100).

2. Baugruppe (1) nach Anspruch 1,
**dadurch gekennzeichnet,**
**dass** die Zwischenwand (100) einen Scheibenquerträger (110) aufweist, wobei die Öffnung (130) in der Querrichtung (17) des Fahrzeugs (10) mittig im Scheibenquerträger (110) angeordnet ist.

3. Baugruppe (1) nach Anspruch 1 oder 2,
**dadurch gekennzeichnet,**
**dass** die Tülle (300) einen Führungsabschnitt (340) aufweist, in dem der Leitungsstrang (200) geführt ist, und/oder
**dass** die Tülle (300) einen Befestigungsabschnitt (320) aufweist, der dazu ausgeführt ist, die Tülle (300) an der Zwischenwand (100) zu befestigen.

4. Baugruppe (1) nach einem der vorhergehenden Ansprüche,
**dadurch gekennzeichnet,**
**dass** die Tülle (300) zumindest ein Ohr (360) aufweist, welches eine Öffnung (361) zur Aufnahme eines Befestigungsmittels aufweist und dazu ausgeführt ist, an der Zwischenwand (100) anzuliegen.

5. Baugruppe (1) nach einem der vorhergehenden Ansprüche,
**dadurch gekennzeichnet,**
**dass** die Tülle (300) eine Dichtung (350) aufweist, welche dazu ausgeführt ist, die Tülle (300) gegen die Zwischenwand (100) abzudichten.

6. Baugruppe (1) nach einem der vorhergehenden Ansprüche,
**dadurch gekennzeichnet,**
**dass** die Tülle (300) zumindest ein Rastelement (331) aufweist, welches dazu ausgeführt ist, mit der Zwischenwand (100) zu verrasten.

7. Fahrzeug (10), aufweisend eine Baugruppe (1) nach einem der vorhergehenden Ansprüche.

8. Verfahren zum Herstellen einer Leitungsverbindung zwischen einem Fahrzeuginnenraum (11) und einem Motorraum (12) eines Fahrzeugs (10), aufweisend die folgenden Schritte:
- Positionieren einer Baugruppe (1) nach einem der Ansprüche 1 bis 6 an einem Cockpit (14),
- Durchführen des Leitungsstrangs (200) durch die Öffnung (130) der Zwischenwand (100),
- Befestigen der Tülle (300) an der Zwischenwand (100).

9. Verfahren nach Anspruch 8,
**dadurch gekennzeichnet,**
**dass** ferner zumindest einer der folgenden Schritte vorgesehen ist:
- Verpacken von Bordnetzkomponenten des Fahrzeuges (10) in einem Packsack,
- Einfahren des Cockpits (14) durch eine Türöffnung (15) des Fahrzeugs (10),
- Befestigen des Cockpits (14) an einem Fahrzeugrahmen (13),
- Verbinden einer Lasche (310) der Tülle (300) mit der Zwischenwand (100),
- Verrasten zumindest eines Rastelementes (331) mit der Zwischenwand (100).

## Claims

1. An assembly (1) for a cable connection between a vehicle interior (11) and an engine compartment (12) of a vehicle (10), having:
- a partition wall (100) that is designed to be arranged between the vehicle interior (11) and the engine compartment (12),
- a wiring harness (200) that is designed to electrically connect a large number of on-board electrical system components of the vehicle (10) to one another,
- a grommet (300) that is connected to the cable harness (200), wherein the grommet (300) has a tab (310) that is designed to bear against the partition wall (100),
wherein the partition wall (100) has an opening (130) in the middle in a transverse direction (17) of the vehicle (10), in which the grommet (300) is arranged,
wherein the tab (310) has a material insert (311) that consists of the same material as a part of the partition wall (100) surrounding the tab (310).

2. The assembly (1) according to claim 1,
**characterized in that**
the partition wall (100) has a pane cross-member (110), wherein the opening (130) is arranged in the middle in the pane cross-member (110) in the transverse direction (17) of the vehicle (10).

3. The assembly (1) according to claim 1 or claim 2,
**characterized in that**
the grommet (300) has a guide section (340) in which the cable harness (200) is guided, and/or
the grommet (300) has a fastening section (320) that is designed to fasten the grommet (300) to the partition wall (100).

4. The assembly (1) according to any of the preceding claims,
**characterized in that**
the grommet (300) has at least one lug (360) that has an opening (361) for receiving a fastening means and is designed to bear against the partition wall (100).

5. The assembly (1) according to any of the preceding claims,
**characterized in that**
the grommet (300) has a seal (350) that is designed to seal the grommet (300) against the partition wall (100).

6. The assembly (1) according to any of the preceding claims,
**characterized in that**
the grommet (300) has at least one latching element (331) that is designed to latch in place with the partition wall (100).

7. A vehicle (10) having an assembly (1) according to any of the preceding claims.

8. A method for establishing a cable connection between a vehicle interior (11) and an engine compartment (12) of a vehicle (10), comprising the following steps:
- positioning an assembly (1) according to any of claims 1 to 6 on a cockpit (14),
- feeding the cable harness (200) through the opening (130) in the partition wall (100),
- fastening the grommet (300) to the partition wall (100).

9. The method according to claim 8,
**characterized in that**
the following steps can also be provided:
- packing the on-board electrical system components (10) into a packing bag,
- bringing the cockpit (14) in through a door opening (15) of the vehicle (10),
- fastening the cockpit (14) to a vehicle frame (13),
- connecting a tab (310) of the grommet (300) to the partition wall (100),
- latching in place to the partition wall (100) at least one latching element (331).

## Revendications

1. Module (1) pour un raccordement de fils entre un habitacle de véhicule (11) et un compartiment moteur (12) d'un véhicule (10), présentant :
- une cloison (100) qui est réalisée pour être agencée entre l'habitacle de véhicule (11) et le compartiment moteur (12),
- un faisceau de fils (200) qui est réalisé pour connecter électriquement entre eux une pluralité de composants de réseau de bord du véhicule (10),
- un passe-fil (300) raccordé au faisceau de fils (200), dans lequel le passe-fil (300) présente une patte (310) qui est réalisée pour venir en butée contre la cloison (100),
dans lequel la cloison (100) présente au centre, dans une direction transversale (17) du véhicule (10), une ouverture (130) dans laquelle est agencé le passe-fil (300),
dans lequel la patte (310) présente un insert de matériau (311) qui est constitué du même matériau qu'une partie de la cloison (100) entourant la patte (310).

2. Module (1) selon la revendication 1,
**caractérisé en ce**
**que** la cloison (100) présente une traverse de vitre (110), dans lequel l'ouverture (130) est agencée au centre de la traverse de vitre (110) dans la direction transversale (17) du véhicule (10).

3. Module (1) selon la revendication 1 ou 2,
**caractérisé en ce**
**que** le passe-fil (300) présente une section de guidage (340) dans laquelle le faisceau de fils (200) est guidé, et/ou
**que** le passe-fil (300) présente une section de fixation (320) qui est réalisée pour fixer le passe-fil (300) à la cloison (100).

4. Module (1) selon l'une des revendications précédentes,
**caractérisé en ce**
**que** le passe-fil (300) présente au moins une oreille (360) qui présente une ouverture (361) pour recevoir un moyen de fixation et qui est réalisée pour venir en appui contre la cloison (100).

5. Module (1) selon l'une des revendications précédentes,
**caractérisé en ce**
**que** le passe-fil (300) présente un joint (350) qui est réalisé pour rendre étanche le passe-fil (300) contre la cloison (100).

6. Module (1) selon l'une des revendications précédentes,
**caractérisé en ce**
**que** le passe-fil (300) présente au moins un élément d'encliquetage (331) qui est réalisé pour s'encliqueter avec la cloison (100).

7. Véhicule (10), présentant un module (1) selon l'une des revendications précédentes.

8. Procédé de fabrication d'un raccordement de fils entre un habitacle de véhicule (11) et un compartiment moteur (12) d'un véhicule (10), présentant les étapes suivantes :
- positionnement d'un module (1) selon l'une des revendications 1 à 6 sur un cockpit (14),
- passage du faisceau de fils (200) à travers l'ouverture (130) de la cloison (100),
- fixation du passe-fil (300) à la cloison (100).

9. Procédé selon la revendication 8,
**caractérisé en ce**
**qu**'il est en outre prévu au moins l'une des étapes suivantes :
- emballage des composants du réseau de bord du véhicule (10) dans un sac d'emballage,
- introduction du cockpit (14) par une ouverture de porte (15) du véhicule (10),
- fixation du cockpit (14) sur une structure de véhicule (13) ;
- raccordement d'une patte (310) du passe-fil (300) à la cloison (100),
- encliquetage d'au moins un élément d'encliquetage (331) avec la cloison (100).
